**Europäisches Patentamt**

**European Patent Office**

**Office européen des brevets**

(19)

(11) Veröffentlichungsnummer: **0 261 504**
**A2**

(12) # EUROPÄISCHE PATENTANMELDUNG

(21) Anmeldenummer: **87113171.0**

(22) Anmeldetag: **09.09.87**

(51) Int. Cl.4: **B23D 61/12**

(30) Priorität: **24.09.86 DE 3632415**
**08.05.87 DE 3715290**

(43) Veröffentlichungstag der Anmeldung:
**30.03.88 Patentblatt 88/13**

(84) Benannte Vertragsstaaten:
**CH DE FR LI**

(71) Anmelder: **Hawera Probst GmbH + Co.**
**Schützenstrasse 77**
**D-7980 Ravensburg(DE)**

(72) Erfinder: **Hugger, Hermann**
**Heuweg 2**
**D-7963 Altshausen(DE)**

(74) Vertreter: **Patentanwälte Dipl.-Ing. E. Eisele**
**Dr.-Ing. H. Otten**
**Seestrasse 42**
**D-7980 Ravensburg(DE)**

(54) **Sägeblatt.**

(57) Es wird ein Sägeblatt, vorzugsweise zum einseitigen Einspannen in eine Werkzeugmaschine, wie Stichsägeblatt, Säbelsägeblatt o. dgl. vorgeschlagen, welches über die gesamte Schneidlänge eine Schneidleiste oder Zahnleiste aus Hartmetall mit geometrisch bestimmten Schneidzähnen aufweist. Um die Biege-und Torsionseigenschaften des Sägeblatts (10) zu verbessern, ist die Schneidleiste (13) in mehreren Segmenten (14) mit dazwischen liegenden Dehnfugen (15) ausgebildet (hierzu Zeichnung).

Fig 1

EP 0 261 504 A2

## "Sägeblatt"

Die Erfindung betrifft ein Sägeblatt, vorzugsweise zum einseitigen Einspannen in eine Werkzeugmaschine, wie Stichsägeblatt, Säbelsägeblatt o. dgl. nach dem Oberbegriff der Ansprüche 1 oder 9.

Einseitig in eine Werkzeugmaschine eingespannte Sägeblätter sind einer hohen Biegebelastung und Torsionsbelastung ausgesetzt. Das Grundmaterial der Sägeblätter, nachstehend Stichsägeblätter genannt, besteht deshalb aus einem Material hoher Zähigkeit bzw. hoher Elastizität, d. h. aus einem legierten Werkzeugstahl oder Federstahl.

Um besonders harte Materialien wie glasfaserverstärkte Kunststoffe, Fliesen, Keramik usw. bearbeiten zu können, sind Stichsägeblätter mit Hartmetall-Kornbeschichtung, d.h. Stichsägeblätter ohne geometrisch definierter Schneide bekanntgeworden. Der Materialabtrag erfolgt in diesem Fall - schleifend. Weiterhin sind Sägeblätter mit hartmetall-beschichteten Zahnspitzen, d. h. mit definierter geometrischer Schneide zur Bearbeitung besonders harter Materialien bekanntgeworden. Das weiterhin bekannte Aufbringen von Hartmetallplättchen auf die Schneidzähne, wie es zum Beispiel aus der DE-OS 33 07 170 bekannt ist, ist bei Stichsägeblättern mit sehr kleinen Zähnen kaum durchführbar, da das Aufbringen der Hartmetall-Schneidplättchen und deren Haltbarkeit zu großen Problemen führt. Ein Stichsägeblatt aus Vollhartmetall scheidet aus Kostengründen und insbesondere wegen den schlechten Biegeeigenschaften von Hartmetall - große Härte, hohe Sprödigkeit - aus.

Aus der britischen Patentanmeldung GB-A-840 784 ist ein Stichsägeblatt bekanntgeworden, bei welchem der Grundkörper mit einer schmalen Hartmetall-Schneidleiste versehen ist. Die über die ganze Schneidlänge durchgehende Hartmetall-Schneidleiste wird durch Löten oder Schweißen aufgebracht. Die Verbindung zum Grundkörper erfolgt zusätzlich durch eine V-förmige oder Schwalbenschwanzförmige Aufnahme in den stirnseitigen Bereichen der Hartmetall-Schneidleiste. Eine ähnliche Konstruktion ist in der DE-OS 30 17 251 angegeben.

Die Ausbildung eines Sägeblatts mit aufgebrachter Hartmetall-Schneidleiste hat zwar den Vorteil, daß die guten Biege-und Torsionseigenschaften des Grundkörpers aus billigem Material verbunden werden mit der großen Härte der Schneidzähne durch den Einsatz von teurem Hartmetall. Diese Materialpaarung kann jedoch bei hohen Biege-und Torsionsbelastungen zu Schwierigkeiten führen. Insbesondere kann die Verbindung zwischen Hartmetall-Leiste und Grundkörper zerstört werden, verbunden mit einem Abspringen der Hartmetall-Leiste. Die Unfallgefahr ist deshalb nicht unbeträchtlich.

Die bekannten Schneidleisten mit Schneidzähnen aus Hartmetall werden im allgemeinen durch Hartlöten oder Schweißen auf den Grundkörper aufgebracht. Da sich die Ausdehnungskoeffizienten der beiden Materialien deutlich unterscheiden, treten auch bei diesem Herstellungsprozeß erhebliche Spannungen in der Löt- oder Schweißverbindung auf, die ebenfalls zu einem vorzeitigen Bruch der Verbindung führen können.

Aus der DE-PS 323 622 ist ein Metallsägeblatt mit eingesetzten Zähnen bekannt geworden, bei welchem ein aus mehreren Zähnen bestehendes Segment in einen gefalzten Metallstreifen eingesetzt und verklemmt werden. Hier entstehen zwar keine Lötspannungen, aber eine feste dauerhafte Verbindung läßt sich hiermit nicht erzielen.

Bei Kreissägeblättern ist es weiterhin bekannt geworden, einzelne Zähne in das Kreissägeblatt einzusetzen und zu befestigen (DE-PS 48 379; DE-PS 284 100). Auch hier erfolgt die Befestigung der einzelnen Zähne mittels formschlüssiger Verbindung, beispielsweise durch schwalbenschwanzartige Verbindungen. Die einzelnen Zähne werden zum Teil über Schraubstifte mit dem Sägeblatt verbunden.

Der Erfindung liegt die Aufgabe zugrunde, ein Sägeblatt, insbesondere ein Stichsägeblatt, Säbelsägeblatt o. dgl. vorzuschlagen, welches die vorgenannten Nachteile vermeidet und insbesondere einer erheblich höheren Biegebeanspruchung und Torsionsbeanspruchung im Gebrauch gewachsen ist und bei welchem die Verbindung zwischen Hartmetall-Leiste bzw. den einzelnen Zähnen und dem Grundkörper in der Festigkeit verbessert ist.

Diese Aufgabe wird ausgehend von einem Sägeblatt der einleitend bezeichnenden Art erfindungsgemäß durch die kennzeichnenden Merkmale des Anspruchs 1 sowie des Anspruchs 9 gelöst.

Die Erfindung beruht auf der Erkenntnis, daß zur Vermeidung der Nachteile beim angegebenen Stand der Technik technische Maßnahmen getroffen werden müssen, die eine Verminderung der Biegespannungen und Torsionsspannungen in der Hartmetall-Schneidleiste bewirken. Dies kann erfindungsgemäß dadurch erfolgen, daß die Hartmetall-Schneidleiste in Segmenten aufgeteilt ist, so daß Dehnfugen zum Spannungsausgleich gebildet werden. Die Dehnfugen bilden quasi Gelenke zwischen den einzelnen Segmenten, so daß die Hartmetall-Schneidleiste sich in ihrem Biegeverhalten bzw. in ihrer Elastizität vollkommen dem Grundkörper anpaßt. Beim erfindungsgemäßen Stichsägeblatt werden deshalb die Vorteile von Hartmetall-Schneidzähnen mit den guten Biege-und Torsionseigenschaften von herkömmlichen Stichsägeblättern vereinigt.

Durch die in den Unteransprüchen aufgeführten Maßnahmen ist eine vorteilhafte Weiterbildung und Verbesserung des im Hauptanspruch angegebenen Sägeblatts möglich.

In Ausbildung der Erfindung nach Unteranspruch 2 wird die Breite der Dehnfuge zwischen den Segmenten in der Größenordnung von wenigen Zehntel-Millimeter ausgeführt, wobei die Dehnfuge vorzugsweise mit Lot ausgefüllt ist. Die Breite der Dehnfuge wird im Zusammenhang mit den unterschiedlichen Ausdehnungskoeffizienten des Hartmetall-Werkstoffes und des Grundkörpers beim Lötvorgang ermittelt, wobei die gewählte Länge der Segmente ebenfalls eine Rolle spielt. Der Verbindungsvorgang beim Lötprozeß sollte möglichst spannungsfrei erfolgen.

Die Ausbildung der Erfindung nach Unteranspruch 3 sieht vor, daß sich die Dehnfugen nicht über die ganze Höhe der Hartmetall-Schneidleiste erstreckt, so daß im Bereich der Verbindungsstelle ein sehr schmaler Verbindungssteg zwischen den einzelnen Segmenten stehen bleibt. Dieser schmale Verbindungssteg dient der besseren Handhabung, Fixierung und Justierung der Segmente beim Lötvorgang, ohne daß die grundsätzlichen Biegeeigenschaften bzw. der Gelenkeffekt zwischen den Segmenten verloren geht.

Gemäß der Weiterbildung der Erfindung nach Unteranspruch 4 sind einige günstige Abmaße zur Herstellung der Erfindung angegeben. Selbstverständlich können auch andere Abmaße gewählt werden, soweit der erfindungsgemäße Effekt beibehalten bleibt. Insbesondere können für Stichsägen gebräuchliche Zahnformen mit verschiedenen Schneidengeometrien in die Segmente eingebracht werden.

Die Ausbildung der Erfindung nach Unteranspruch 5 sieht vor, daß in an sich bekannter Weise die Breite der Schneidzähne größer ist als die Breite des Grundkörpers, um ein Verklemmen des Stichsägeblatts im Einsatz zu vermeiden.

Gemäß der Weiterbildung der Erfindung nach Unteranspruch 6 wird der Verbindungsquerschnitt zwischen den Segmenten und dem Grundkörper in verschiedener Geometrie zur besseren Justierung und zur Vergrößerung der Lötfläche ausgeführt.

Gemäß Unteranspruch 7 soll jedes Segment mindestens zwei Zähne aufweisen. Vorzugsweise werden jedoch mehrere Schneidzähne pro Segment verwendet.

Nach Unteranspruch 8 soll die Dehnfuge im Zahngrund angeordnet sein, um eine Schwächung eines angeschnittenen Zahnes zu vermeiden.

Eine selbständige Erweiterung des erfindungsgemäßen Gedankens ist im Nebenanspruch 9 sowie den nachfolgenden Unteransprüchen 10 bis 11 dargestellt. Danach kann der Schneidenbereich eines Stichsägeblatts auch aus einzelnen Zahnteilen bestehen, die zwischen sich Spannungsdehnfugen bilden. Die einzusetzenden Zähne sind derart geformt, daß die Schneidengeometrie durch Anordnung der einzelnen Zahnteile bereits gegeben ist. Die Lage der Zahnteile erfolgt dabei derart, daß sowohl beim Herstellungsprozeß Spannungen in der Lötverbindung und Biegespannungen und Torsionsspannungen im Einsatz weitgehend vermieden werden.

Gemäß den weiteren Unteransprüchen 10 und 11 sind verschiedene Verbindungsarten zwischen den einzelnen Zähnen und dem Grundkörper dargestellt. Dies können formschlüssige Verbindungen wie angegeben sein.

Gemäß der Weiterbildung nach Unteranspruch 11 und 12 wird durch eine besondere Formgebung der einzelnen Zahnteile der Spanwinkel und der Achswinkel festgelegt.

Nach Unteranspruch 13 bildet der zahnförmig ausgebildete Grundkörper eine formschlüssige Abstützung für die Einzelzähne.

Weitere erfindungswesentliche Merkmale und Vorteile ergeben sich aus dem nachfolgenden anhand der Zeichnung näher erläuterten Ausführungsbeispiel. Es zeigen

Fig. 1 eine Seitenansicht eines erfindungsgemäßen Stichsägeblatts und

Fig. 2a bis 2e verschiedene Ausführungsformen des Querschnitts entlang der Schnittlinie I-I in Fig. 1.

Fig. 3a eine Draufsicht auf ein Stichsägeblatt mit Einzelzähnen,

Fig. 3b eine Alternative zu Fig. 3a,

Fig. 4a eine Seitenansicht eines Stichsägeblatts mit Einzelzähnen in verschiedener Formgebung,

Fig. 4b eine alternative Ausführungsform der Einzelzähne,

Fig. 5a bis 5g verschiedene Schneidenformen der Schneidzähne und

Fig. 6a bis 6g verschiedene Verbindungsformen der Einzelzähne zum Grundkörper.

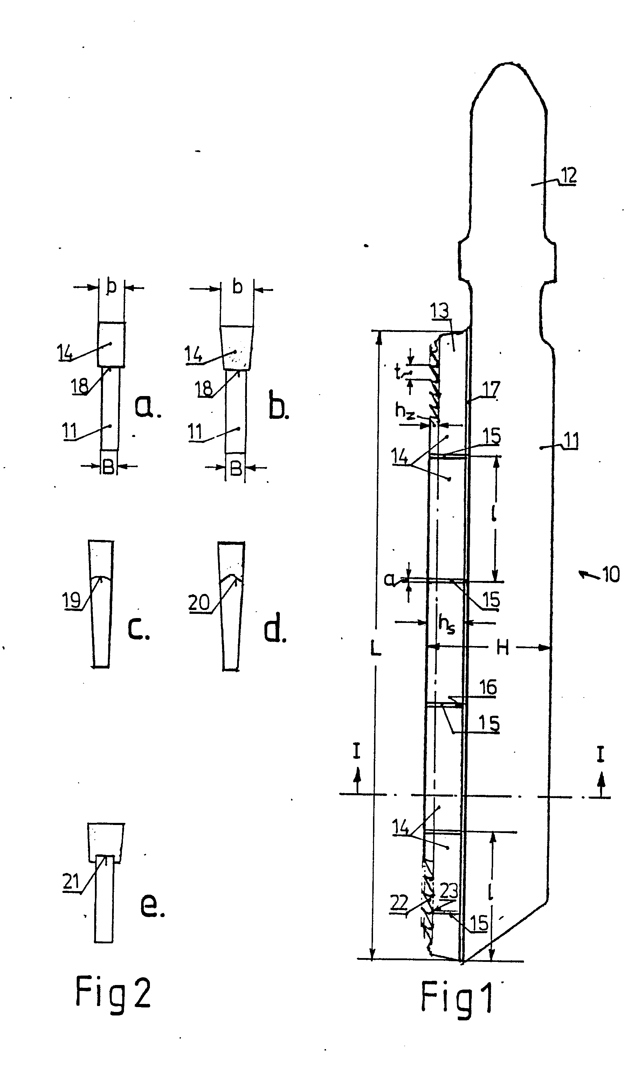

Das in der Fig. 1 dargestellte Stichsägeblatt (10) besteht aus einem Grundkörper (11) aus einem Material, wie es bei herkömmlichen Stichsägeblätter verwendet wird, d. h. aus einem legierten Werkzeugstahl mit guten Federeigenschaften, d. h. hoher Zähigkeit und hoher Elastizität. Das in der Fig. 1 dargestellte stark vergrößerte Sägeblatt hat üblicherweise eine Schneidenlänge von L ≈ 5 bis 10 cm. Der Einspannschaft (12) ist je nach Typ der Werkzeugmaschine unterschiedlich gestaltet.

Das erfindungsgemäße Stichsägeblatt weist eine schmale Schneidleiste (13) aus Hartmetall auf, wobei die Schneidleiste aus mehreren, meist gleich langen (Länge "1") Segmenten (14) besteht. In der Fig. 1 sind beispielsweise fünf Segmente (14) hintereinander aufgereiht, die durch Dehnfugen (15) in einem Abstand "a" hintereinander angeordnet sind. Die Dehnfuge (15) kann sich über die ganze Höhe $h_s$ der Segmente (14) erstrecken. Alternativ hierzu ist es möglich, daß ein kleiner Verbindungssteg (16) mit einer Stärke von nur wenigen Zehntel-Millimeter vorhanden bleibt, um die einzelnen Segmente (14) miteinander zu verbinden. Dies hat beim Herstellungsprozeß den Vorteil, daß die Segmente (14) einzeln gegeneinander fixiert bleiben und die Fixierung und Justierung gegenüber dem Grundkörper (11) beim Lötvorgang vereinfacht wird.

Der Abstand "a" zwischen den Segmenten (14) richtet sich nach den unterschiedlichen Ausdehnungskoeffizienten des Hartmetallwerkstoffs der Segmente (14) und des Grundkörpers (11). Je nach Länge "1" der Segmente (14) wird die unterschiedliche Ausdehnung der Materialien beim Lötvorgang derart berücksichtigt, daß geringste Spannungen in der Lötverbindung (17) zwischen Segmenten (14) und dem Grundkörper (11) entstehen. Beim Lötvorgang wird auch die Dehnfuge (15) im allgemeinen mit Lot ausgefüllt. In Sonderfällen kann sie jedoch auch offen bleiben. Maßgeblich ist die Gelenkwirkung zwischen den einzelnen Segmenten (14) bei einer Biegebeanspruchung bzw. Torsionsbeanspruchung des Stichsägeblatts. Die Anzahl "n" der Segmente (14) richtet sich nach den Materialeigenschaften der unterschiedlichen Bestandteile. Je mehr Segmente pro Schnittlänge "L" vorhanden sind, um so besser ist die Anpassung der Biegesteifigkeit der Schneidleiste (13) an den Grundkörper (11). Das Verhältnis der Gesamtschneidlänge "L" zur Segmentlänge "1" kann gewählt werden L : 1 wie 10 : 1 bis 2 : 1.

Vorzugsweise wird die Segmentlänge etwa 1 ≈ 1 cm betragen, bei einer Schneidlänge von L ≈ 5 cm.

Das Verhältnis der Gesamthöhe "H" zur Segmenthöhe "$h_s$" beträgt etwa H : $h_s$ 2 : 1 bis 5 : 1. Insbesondere wird die Höhe "$h_s$" der Segmente derart ausgeführt, daß die Zahnhöhe "$h_z$" ausreichend Platz findet. Die Segmenthöhe "$h_s$" braucht jedoch nur unwesentlich größer als die gewünschte Zahnhöhe "$h_z$" zu sein.

Die Form der Schneidzähne (22) wird in an sich bekannter Weise und in bekannten Schneidengeometrien in die Hartmetall-Leiste vorzugsweise durch ein Diamantschleifverfahren eingebracht und zwar nach dem Lötverfahren, wobei die Dehnfuge (15) vorzugsweise jeweils im Zahngrund (23) der Schneidzähne angeordnet ist.

Die Verbindung zwischen der Schneidleiste (13), bestehend aus einzelnen Segmenten (14) und dem Grundkörper (11) geschieht vorzugsweise über die Lötverbindung (17). Hierzu wird entsprechend der Darstellung in Fig. 2a bis 2e die Verbindungsfläche geometrisch angepaßt.

In Fig. 2a und b werden die Segmente (14) mit ebener Verbindungsfläche (18) im Hartlötverfahren aufgebracht. Grundsätzlich ist jedoch auch eine Schweißverbindung möglich.

In der Darstellung nach Fig. 2c ist die Lötverbindung (17) als im Querschnitt kreissegmentförmige Verbindungsfläche (19) ausgebildet. Gleichermaßen ist die alternative Ausführungform nach Fig. 2d als V-förmige Verbindungsfläche (20) (Fig. 2d) und U-förmige Verbindungsfläche (21) (Fig. 2e) ausgebildet. Die Verbindungsflächen (19 bis 21) haben den Vorteil, daß eine vergrößerte und zentrierte Verbindungsfläche zwischen der Schneidleiste (13) und dem Grundkörper (11) geschaffen wird, so daß eine erhöhte Festigkeit und eine erleichterte Montage möglich ist.

Grundsätzlich wird die Breite "b" der Schneidleiste (13) bzw. der Segmente (14) breiter ausgeführt als die Breite "B" des Grundkörpers (11). Dies kann durch einen Absatz zwischen den Teilen (14 bzw. 11) entsprechend der Darstellung in Fig. 2a, b, e oder durch eine konische Ausbildung entsprechend der Darstellung in Fig. 2c, d geschehen. Durch die breitere Schneidleiste bzw. Zahnleiste (13) brauchen die Zähne nicht geschränkt zu werden um einen freien Schnitt zu ermöglichen.

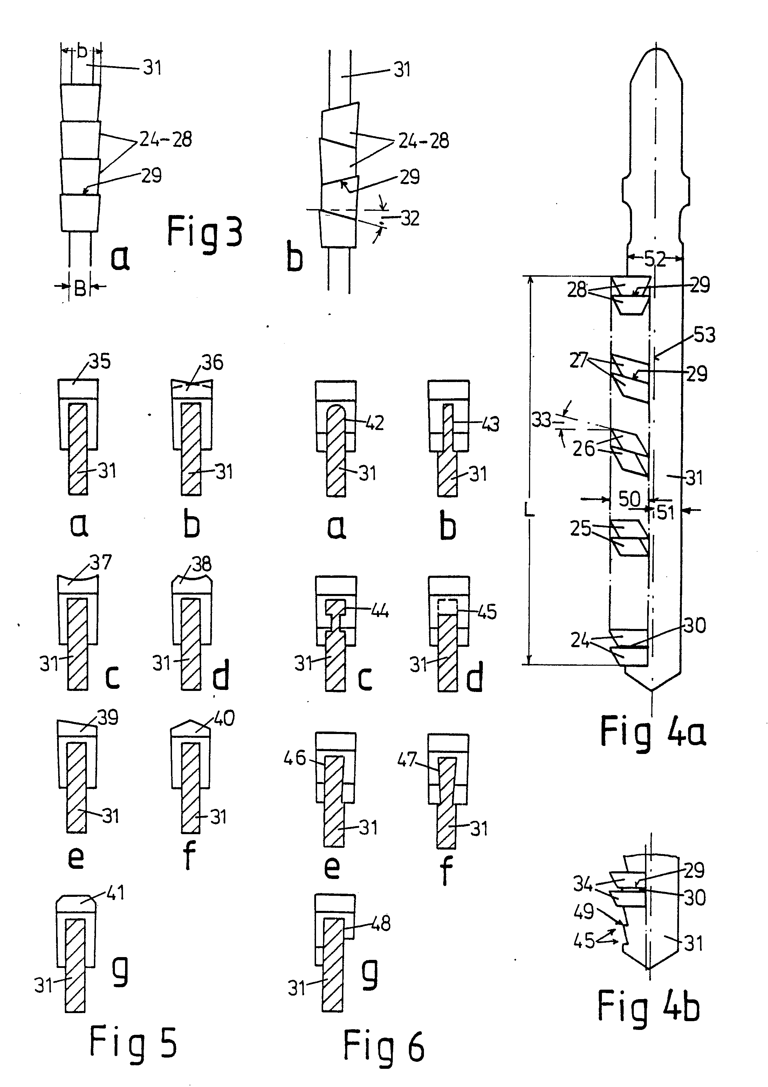

Die in den Figuren 3 bis 6 dargestellte weitere Lösung der erfindungsgemäßen technischen Gesamtaufgabe sieht vor, daß anstelle von Zahnsegmenten (14) in der Fig. 1 ein Schneidenbereich gewählt wird, der aus einzelnen Zahnteilen (24 bis 28) bzw. Einzelzähnen besteht, mit der dazwischen angeordneten Spannungsdehnfuge (29). Die Einzelzähne (24 bis 28) sind entsprechend der Darstellung in Fig. 6a) bis g) formschlüssig an den Grundkörper (31) angepaßt und werden über eine Lötverbindung (30) miteinander bzw. mit dem Grundkörper (31) verbunden. Durch Variation der Anordnung der einzelnen Zahnteile (24 bis 28) kann die Schneidengeometrie, wie dies in den Figuren 3a und 3b dargestellt ist, geändert werden. Gemäß der Darstellung in Fig. 3a wird die Zahnform (24 bis 28) durch Hintereinanderreihung zu einer Zahnleiste zusammengefügt, wobei zwischen den Einzelzähnen (24 bis 28) stets eine Spannungsdehnfuge (29) vorhanden ist, die zum Abbau von Spannungen in der Lötverbindung (30) zwischen den Zähnen führt. Die in Fig. 3a dargestellten trapezförmigen Einzelzähne sind symmetrisch zur Längsachse des Sägeblatts ausgerichtet.

Gemäß Fig. 3b werden die Einzelzähne derart angeordnet, daß sie in Draufsicht als quer gestelltes Trapez zu liegen kommen, so daß die Dehnfugen (29) in einem Achswinkel (32) gegenüber der Querachse angeordnet sind, d. h. die Zähne liegen asymmetrisch zur Längsachse des Sägeblatts.

Durch die besondere Formgebung der einzelnen Zahnteile (24 bis 28) kann der in Fig. 4a dargestellte Spanwinkel (33) sowie der in Fig. 3b dargestellte Achswinkel (32) vorbestimmt und variiert werden.

Es ist auch möglich, daß längs der Schneidleiste (L) verschiedenartige Zahnformen über einen bestimmten Längenbereich eingesetzt werden, um unterschiedlichen Gegebenheiten beim Schneidvorgang gerecht zu werden. So können beispielsweise anstelle von Hartmetall-Schneidzähnen einige wenige diamantbeschichtete Schneidzähne zur Erhöhung der Schnittleistung eingesetzt werden. Der Einsatz von gleichartigen oder verschiedenartigen Zahnformen soll durch Fig. 4a dargestellt werden.

Gemäß der Darstellung der Erfindung in Fig. 4b weist der Grundkörper (31) eine zahnförmige, insbesondere sägezahnartige Grundstruktur (45) auf, auf die die besonders geformten Einzelzähne (34) formschlüssig aufgesetzt sind. Durch die zahnförmige Grundstruktur ist die Anordnung sowie die Lage der Einzelzähne (34) vorbestimmt, wobei die Brust (49) der im Grundkörper (31) eingebrachten Zahnstruktur (45) der Abstützung der Einzelzähne (34) dient. Durch diese zahnförmige Grundstruktur wird weiterhin der zwischen den Einzelzähnen notwendige Abstand für die Spannungsdehnfuge (29) vorgegeben. Hierdurch kann die Lötverbindung (30) präzise und ordnungsgemäß durchgeführt werden. Die Einzelzähne (34) müssen allerdings in ihrem Grundaufbau der zahnförmigen Grundstruktur (45) angepaßt sein.

In der Fig. 5 sind verschiedene Schneidenformen der einzelnen Zahnteile dargestellt, wie sie in Fig. 3a bis 4b verwendbar sind. Gemäß Fig. 5a ist eine ebene Schneidenform (35), gemäß Fig. 5b eine V-förmige oder dachförmige Schneidenform (36) vorgesehen. Fig. 5c zeigt eine konkave Schneidenform (37), Fig. 5d eine konkave Schneidenform (38) mit seitlicher Abschrägung, Fig. 5e eine seitlich abgeschrägte Schneidenform (39), Fig. 5f eine dachförmige Schneidenform (40) ähnlich der alternativen Darstellung in Fig. 5b. Fig. 5g zeigt eine ebene Schneidenform (41) mit seitlichen Abschrägungen.

In Fig. 6a bis 6e sind verschiedene Verbindungsformen zwischen den einzelnen Zahnteilen (24 bis 28) und dem Grundkörper (31), ähnlich der Anordnung in Fig 2 dargestellt. Die Einzelzähne können auf den Grundkörper (31) quer zur Längsachse (53) des Sägeblatts aufgeschoben bzw. perlenförmig hintereinander parallel zur Längsachse (53) aufgereiht werden. Letzteres gilt natürlich nicht für die Anordnung nach Fig. 4b bzw. 6d, bei welcher die Einzelzähne nur aufsteckbar sind.

In Fig. 6a und 6b ist der Grundkörper (31) in einer U-förmigen Verbindung mit dem Zahnteil verbunden, wobei der Verbindungsgrund in Fig. 6a bogenförmig (42) und in Fig. 6b rechteckförmig (43) ausgebildet ist. Hier können die Zähne von oben aufgesteckt werden. Fig. 6c zeigt eine T-förmige Verbindung (44) zum Aufschieben der Einzelzähne hintereinander. Fig. 6d zeigt eine sägezahnförmige Verbindung (45) zwischen Grundkörper (31) und Zahnteil entsprechend der Beschreibung zu Fig. 4b. Die Ausbildung nach Fig. 6e zeigt eine einseitig-schräge Verbindung (46), die Fig. 6f eine schwalbenschwanzförmige Verbindung (47) zwischen den Teilen Grundkörper (31) und Zahn. Als Alternative ist in Fig. 6g eine L-förmige Verbindung (48) zwischen Grundkörper (31) und Zahn dargestellt.

Diese zuvor beschriebenen Verbindungsarten gemäß Fig. 6 können prinzipiell auch in der Darstellung nach Fig. 2 verwendet werden und umgekehrt.

Bezüglich der Breite b der Einzelzähne (24 bis 28) und der Breite B des Grundkörpers (31) (s. Fig. 3a) gilt das Gleiche wie zu Fig. 1 und 2 ausgeführt. Die Höhe (50) der Einzelzähne (24 bis 28) ist etwa gleich groß oder etwas größer als die halbe Breite (51) des Grundkörpers (31) mit der Gesamtbreite (52) (s. Fig. 4a).

**Ansprüche**

1. Sägeblatt, vorzugsweise zum einseitigen Einspannen in eine Werkzeugmaschine, wie Stichsägeblatt, Säbelsägeblatt o. dgl., mit einem Grundkörper aus einem Material hoher Zähigkeit bzw. hoher Elastizität, insbesondere aus legiertem Werkzeugstahl und einer hierauf aufgebrachten - schmalen Schneidleiste mit geometrisch bestimmten Schneidzähnen aus einem Material mit großer Härte und dadurch geringer Elastizität und Zähigkeit, insbesondere aus Hartmetall, dadurch gekennzeichnet, daß die Schneidleiste (13) aus wenigstens zwei Segmenten (14) mit dazwischen liegenden Spannungsdehnfugen (15) besteht, die über eine Lötverbindung (17) oder Schweißverbindung miteinander und/oder mit dem Grundkörper (11) verbunden sind, wobei die Länge "1" der Segmente (14) derart bemessen ist, daß sowohl beim Herstellungsprozeß Spannungen in der Lötverbindung bzw. Schweißverbindung (17) und/oder Biegespannungen oder Torsionsspannungen im Einsatz vermieden sind.

2. Sägeblatt nach Anspruch 1, dadurch gekennzeichnet, daß die Dehnfuge (15) zwischen den einzelnen Segmenten (14) einen Abstand "a" in der Größenordnung von einigen Zehntel-Millimeter aufweist und daß die Dehnfuge (15) vorzugsweise mit Lot ausgefüllt ist.

3. Sägeblatt nach Anspruch 1 oder 2, dadurch gekennzeichnet, daß die Segmente (14) durch Einschnitte (15) in eine durchgehende Schneidleiste (13) gebildet sind, wobei sich der Einschnitt (15) über die ganze Höhe "hₛ" oder nur über nahezu die ganze Höhe "hₛ" erstreckt, so daß ein Verbindungssteg (16) als Haltesteg zwischen zwei Segmenten (14) im Bereich der Lötverbindung (17) mit dem Grundkörper (11) stehen bleibt.

4. Sägeblatt nach einem oder mehreren der vorhergehenden Ansprüche 1 bis 3, dadurch gekennzeichnet, daß nachstehende Abmessungsverhältnisse anwendbar sind:
a) Gesamthöhe "H", Segmenthöhe "hₛ" H : $h_s = 2 : 1$ bis $5 : 1$
b) Gesamtschneidlänge "L", Segmentlänge "1" $L : 1 = 2 : 1$ bis $10 : 1$

5. Sägeblatt nach einem oder mehreren der vorhergehenden Ansprüche 1 bis 4, dadurch gekennzeichnet, daß die Breite "b" der Schneidzähne (22) größer ist als die Breite "B" des Grundkörpers (11).

6. Sägeblatt nach einem oder mehreren der vorhergehenden Ansprüche, dadurch gekennzeichnet, daß der Verbindungsquerschnitt (18 bis 21) der Löt-oder Schweißverbindung (17) zwischen den Segmenten (14) und dem Grundkörper (11) in Stirnansicht eben (18), gewölbt (19), V-förmig (20) oder U-förmig (21) ausgebildet ist.

7. Sägeblatt nach einem oder mehreren der vorhergehenden Ansprüche, dadurch gekennzeichnet, daß wenigstens zwei Schneidzähne (22) pro Segment (14) vorgesehen sind.

8. Sägeblatt nach einem oder mehreren der vorhergehenden Ansprüche, dadurch gekennzeichnet, daß die Dehnfuge (15) im Zahngrund (23) der Verzahnung (22) angeordnet ist.

9. Sägeblatt, vorzugsweise zum einseitigen Einspannen in eine Werkzeugmaschine, wie Stichsägeblatt o. dgl. mit einem Grundkörper aus einem Material hoher Zähigkeit bzw. hoher Elastizität, insbesondere aus legiertem Werkzeugstahl und auf demselben vorgesehenen Zahnteilen, deren Form geometrischen Schneidzähnen aus einem Material mit großer Härte und dadurch geringer Elastizität und Zähigkeit, insbesondere aus Hartmetall o. dgl. entspricht, dadurch gekennzeichnet, daß der Schneidenbereich aus einzelnen Zahnteilen (24, 25, 26, 27, 28) besteht, mit dazwischenliegenden Spannungsdehnfugen (29), die über eine Lötverbindung (30) miteinander und/oder mit dem Grundkörper (31) verbunden sind, wobei die Anordnung der einzelnen Zahnteile (24 bis 28) die Schneidengeometrie ergibt bzw. die Anordnung der Zahnteile (24 bis 28) derart erfolgt, daß sowohl beim Herstellungsprozeß Spannungen in der Lötverbindung (30) und/oder Biegespannungen oder Torsionsspannungen im Einsatz vermieden sind.

10. Sägeblatt nach Anspruch 9, dadurch gekennzeichnet, daß die einzelnen Zahnteile (24 bis 28) mit verschiedenen Schneidgeometrien (35 bis 41) versehen sind, insbesondere mit ebenen (35), V-förmigen oder dachförmigen (36, 40) konkaven oder konvexen (37, 38), schrägen (39) oder trapezförmigen (41) Schneidkanten.

11. Sägeblatt nach Anspruch 9, dadurch gekennzeichnet, daß die Verbindung zwischen dem Grundkörper (31) und den Schneidzähnen mittels einer formschlüssigen U-förmigen (42, 43), T-förmigen oder doppel-T-förmigen (44), sägezahnförmigen (45), einseitigschrägen (46), schwalbenschwanzförmigen (47) oder L-förmigen (48) Verbindung erfolgt.

12. Sägeblatt nach Anspruch 9, dadurch gekennzeichnet, daß durch die Formgebung der einzelnen Zahnteile (24 bis 28) sowie deren Anordnung in der Zahnleiste der Spanwinkel (33) und/oder der Achswinkel (32) einstellbar sind.

13. Sägeblatt nach einem oder mehreren der vorhergehenden Ansprüche 9 bis 12, dadurch gekennzeichnet, daß der Grundkörper (31) eine zahnförmige Grundstruktur, insbesondere eine sägezahnartige Grundstruktur aufweist, auf die die Einzelzähne (34) formschlüssig aufgesetzt sind, wobei die Grundstruktur die Lage und Anordnung der aufgesetzten und mit dieser verbundenen Einzelzähne bestimmt.

Fig 2

Fig 1

**Fig 3**

a

b

31

24-28

29

B

32

**Fig 5**

a 35 31

b 36 31

c 37 31

d 38 31

e 39 31

f 40 31

g 41 31

**Fig 6**

a 42 31

b 43 31

c 44 31

d 45 31

e 46 31

f 47 31

g 48 31

**Fig 4a**

52

28 29

27 53

29

33

26

31

50 51

25

24 30

L

**Fig 4b**

34 29

30

49

45 31